# EUROPÄISCHE PATENTANMELDUNG

(11) **EP 1 990 173 A1**
(43) Veröffentlichungstag der Anmeldung: **12.11.2008**
(21) Anmeldenummer: 07009121.0
(22) Anmeldetag: 07.05.2007
(51) Int. Cl.: B29C 45/14, B65C 9/00, G09F 3/00, B41M 5/24

(54) **Verfahren zur eindeutigen Kennzeichnung von Spritzgussteilen**

(71) Anmelder: ifm Manfred Otte GmbH, 4563 Micheldorf (AT)
(72) Erfinder: Kastner, Friedrich, 4710 Grieskirchen (AT); Ebner, Josef, 4563 Micheldorf (AT)
(74) Vertreter: Landgraf, Elvira

(57) **Zusammenfassung**

Verfahren zur eindeutigen Kennzeichnung von Spritzgussteilen mit produkt-, herstellungsspezifischen und/oder verwendungsspezifischen Informationen oder Funktionen, dadurch gekennzeichnet, dass in die Spritzgussform ein Etikett oder Teile eines Etiketts, das mit den produkt-, herstellungsspezifischen und/oder verwendungsspezifischen Informationen oder Funktionen versehen ist, eingelegt wird, wobei das Etikett an der Form haftet, und anschließend der Spritzgießvorgang durchgeführt wird.

## Beschreibung

Die Erfindung betrifft ein Verfahren zur Kennzeichnung von Spritzgussteilen mit produkt- oder verwendungsrelevanten Informationen.

Spritzgussteile, wie Fittings und dergleichen werden gemäß dem Stand der Technik mit produktrelevanten Daten versehen, wobei im Wesentlichen gravierte Stempel zur Aufbringung dieser Informationen verwendet werden.

Dabei sind die aufgebrachten Informationen beispielsweise durch die Gravur des Stempels oder der Spritzgussform selbst festgelegt und können nicht für einzelne Teile oder Serien verändert werden.

Außerdem sind diese Verfahren relativ aufwändig durchzuführen und, soweit auf- oder einzubringenden Informationen betrifft, bedingt durch das Herstellungsverfahren relativ unflexibel. Die Stempel werden mechanisch gefertigt durch Gravur oder Laserverfahren oder mittels Ätzverfahren. Eine Änderung der Daten bedingt eine völlige Neuherstellung des Stempels.

Aufgabe der Erfindung ist es, ein Verfahren zur Kennzeichnung von Spritzgussteilen bereitzustellen, das gegebenenfalls inline durchgeführt werden kann und das eine flexible Gestaltung der aufzubringenden Informationen ermöglicht.

Gegenstand der Erfindung ist daher ein Verfahren zur eindeutigen Kennzeichnung von Spritzgussteilen mit produkt-, herstellungsspezifischen und/oder verwendungsspezifischen Informationen oder Funktionen, dadurch gekennzeichnet, dass in die Spritzgussform ein Etikett oder Teile eines Etiketts, das mit den produkt-, herstellungsspezifischen und/oder verwendungsspezifischen Informationen oder Funktionen versehen ist, eingelegt wird, wobei das Etikett an der Form haftet, und anschließend der Spritzgießvorgang durchgeführt wird.

Das Etikett kann in die Spritzgießform beispielsweise manuell oder durch einen Bestückungsautomaten oder durch eine werkzeugintegrierte Bestückungsvorrichtung eingelegt werden.

Die das Etikettenbasismaterial tragende Bahn wird dabei von einer Rolle abgewickelt, anschließend durch ein Druckwerk geführt, dort bedruckt, anschließend mit einer Stanzmaschine ausgestanzt und auf die gewünschte Dimension formatiert. Anschließend werden die ausgestanzten Etiketten auf einem Transportband abgelegt und können mittels eines Bestückungsautomaten oder manuell abgenommen und in die Spritzgussform eingelegt werden. Das verbleibende Trägermaterial wird gleichzeitig aufgewickelt.
Die Etiketten können auch vorgestanzt und gestapelt in einem Magazin- und/oder Bestückungsautomat sein und dort abgenommen und eingelegt werden.

Ferner können die Etiketten durch eine werkzeugintegrierte Bestückungsvorrichtung in die Spritzgussform eingelegt werden. Dabei können die Etiketten bereits vorgedruckt sein und über die Bestückungsvorrichtung in die Form eingelegt werden oder direkt vor dem Einlegen in die Form inline bedruckt werden.

Das Einlegen in die Form kann sowohl am Spritzgusskern, als auch an der Außenkontur erfolgen. Dadurch kann das Etikett dann entweder innen oder außen am fertigen Spritzgussteil zu liegen kommen.

Die Etiketten können dabei bereits vorbedruckt und vorgestanzt sein oder inline, beispielsweise mittels eines Digitaldruckers bedruckt und gestanzt werden. Ferner können die Etiketten laserbeschriftet werden, wobei auch das Etikett beispielsweise vorher mit unstöchimetrischem Aluminiumoxid beschichtet sein kann. Diese schwarze Beschichtung wird dann durch Laserbeschriftung partiell verdampft, die Beschriftung erscheint dann silberig.

Dabei wird eine aus einer Abwickelvorrichtung, einer Aufbringvorrichtung und einer Aufwickelvorrichtung, sowie entsprechenden Umlenkrollen bestehende Bestückungsvorrichtung an geeigneter Stelle im Spritzgusswerkzeug situiert.

Das Etikettenmaterial wird dabei von einer Abwickelvorrichtung abgewickelt, gegebenenfalls durch ein danach situiertes Druckwerk geführt und dort individuell bedruckt, über eine Umlenkrolle zu einer Aufbringvorrichtung, beispielsweise einen Aufbringstempel geführt. Durch diese Vorrichtung wird das Etikett anschließend in der Spritzgussform platziert und anschließend das Trägermaterial über eine Umlenkrolle zur Aufinrickelvorrichtung geführt.

Das Etikett wird in der Spritzgießform durch eine auf dem Etikett vorgesehene Selbstklebeschicht, durch elektrostatische Aufladung, oder durch Formenschutzmittel fixiert.

Ferner kann das Etikett auch über eine auf der Form applizierte Klebeschicht oder über ein Formenschutzmittel in der gewünschten Position fixiert sein.

Bei einem Mehrkomponentenspritzguss wird das Etikett erst vor dem Spritzen der n-ten Komponente eingelegt.

Das Etikett kann entweder offline oder inline mit produkt- und/oder verwendungsspezifischen Informationen oder Funktionen bedruckt werden.

Produktrelevante Informationen sind beispielsweise Informationen über den Hersteller, das Material, die Produktionscharge, das Datum der Herstellung und dergleichen.

Verwendungsrelevante Informationen sind beispielsweise Informationen über mechanische oder thermische Beständigkeiten, Oberflächen (Innen-Außenseite), Leitfähigkeit, Haptik, optimale Verarbeitungs- bzw. Installationstemperatur des Spritzgussteils und dergleichen.

Ferner können als verwendungsspezifische Informationen Indikatoren beispielsweise für eine Temperaturanzeige, Feuchtigkeitsanzeige, Anzeige von Gasaus- oder eintritt (Dichtigkeit) und dergleichen aufgebracht werden.

Gegebenenfalls können auch kundenspezifische Informationen, wie beispielsweise Auftragsdaten, Barcodes für die maschinenlesbare Erfassung des Sprüzgussteils und dergleichen aufgebracht sein. Ferner können auf dem Etikett Felder vorgesehen sein, die der Kunde selbst am fertigen Produkt bedrucken kann, beispielsweise mittels eines inkjet-Druckers, eines Thermotransferdruckers oder eines Laserdruckers.

In besonderen Fällen können auch Sicherheitselemente und/oder verarbeitungsrelevante Elemente aufgebracht sein, beispielsweise RFID-Transponder, Chips, optisch aktive Strukturen, elektrisch letifähige Merkmale oder magnetische Merkmale, thermochrome Merkmale und dergleichen. Diese Elemente können sowohl zum Nachweis der Herkunft oder zur Identifizierung des Sprüzgussteils, als auch zur Erkennung verarbeitungsrelevanter Daten, wie Temperatur und dergleichen oder auch im Falle eines Transponders zum Orten der Produkte dienen.

Diese Schichten können sowohl partiell als auch vollflächig aufgebracht sein und miteinander kombiniert sein.

Insbesondere können. Transponder Informationen für Elektrofusionsfittings übertragen, beispielsweise können Strom/Spannungskurven über die auf dem Etikett vorhandenen Informationen auslesbar sein. Ferner können auf dem Etikett auch thermochrome Schichten aufgebracht sein, die als Schweißindikatoren dienen können.
Ferner kann das Etikett auch elektrolumineszierende Beschichtungen aufweisen, wobei die Beschichtung unter Stromeinfluss zu leuchten beginnt.

Es können aber auch beispielsweise bereits mit Indikatoren (beispielsweise temperatur-, feuchtigkeits- oder drucksensitiven Indikatoren) oder geprägten Strukturen versehene Etiketten vor der Einbringung in die Spritzgussform mittels eines Digitaldruckverfahrens mit individuellen Informationen versehen, also individualisiert werden, wobei hier jedes einzelne Spritzgussteil einer Charge mit unterscheidenden Informationen versehen werden kann.

Ferner können die Etiketten mehrschichtig sein, wobei beispielsweise zwei oder mehrere Schichten des Etiketts mittels einer Releaseschicht verbunden sind. Nach Abziehen einer Schicht des Etiketts kann dann die unter dieser Schicht verborgene Information sichtbar werden.

Als Trägersubstrat des Etiketts kommen beispielsweise flexible Folien, beispielsweise Kunststofffolien, Metallfolien, Papiere, Vliese, Gewebe oder Verbunde in Frage.

Als Kunststofffolien kommen beispielsweise aus Folien Polyimid, Polyolefinen, wie Polyethylen (HDPE, LDPE) oder Propylen, oder deren Copolymere, wie Polyethylenimid, PEEK, PEK, Polyester, Polystyrole, wie ABS, PPS, Polyamid, Polycarbonat, Polyvinylchlorid, Teflon, Polytetraflourethylen und dergleichen. Es können auch coextrudierte PP, PP/PE-Folien oder metallisierte Kunststofffolien verwendet werden.
Die Kunststofffolien weisen vorzugsweise eine Dicke von 5 - 2000 µm, bevorzugt 5 - 700 µm, besonders bevorzugt 10 - 50 µm auf.

Ferner können als Trägersubstrat auch gegebenenfalls oberflächenbehandelte, mit Kunststoffen beschichtete oder kaschierte, oder lackierte Metallfolien, beispielsweise bevorzugt Al- oder Cu- Folien, aber auch Sn-, Ni-, Fe- oder Edelstahlfolien mit einer Dicke von 5 - 500 µm, vorzugsweise 10 bis 100 µm dienen.

Ferner können als Trägersubstrate auch Papier oder Verbunde mit Papier, beispielsweise Verbunde von Papier mit Kunststoffen mit einem Flächengewicht von 20 - 800 g/m², vorzugsweise 40 - 400 g/m² verwendet werden.

Ferner können als Trägersubstrate Vliese, wie Endlosfaservliese, Stapelfaservliese und dergleichen, die gegebenenfalls vemadelt oder kalandriert sein können, oder Gewebe verwendet werden. Vorzugsweise bestehen solche Vliese oder Gewebe aus Kunststoffen, wie PE, PP, PET, PA, PPS aber auch aus Naturfasern (wie Kenaf, Jute, Sisal, Kokos) oder aus mit Naturfasern versetzten Kunststoffen und dergleichen.

Die Aufbringung dieser Informationen auf das Trägersubstrat des Etiketts kann je nach Art der Informationen durch ein geeignetes Druckverfahren, beispielsweise durch Sieb- Tief-, Flexo- oder Digitaldruckverfahren, Inkjetdruck Thermotransferdruck oder Laserbeschriftung, durch Prägeverfahren in Lackschichten und dergleichen, oder durch unterschiedliche aufeinander folgende Druck- oder Prägeverfahren erfolgen.

Das Trägersubstrat kann bereits eine Selbstklebebeschichtung zur Fixierung des fertigen Etiketts in der Spritzgussform aufweisen.

Ferner kann das Etikett mit einer Schutzschicht versehen werden.

Durch geeignete Wahl des Trägersubstrats und der darauf aufgebrachten Information oder Beschichtung kann das Etikett tiefziehfähig gestaltet sein wodurch die Anlagerung an konkaven oder konvexen Oberflächen des Spritzgussteils erleichtert wird.

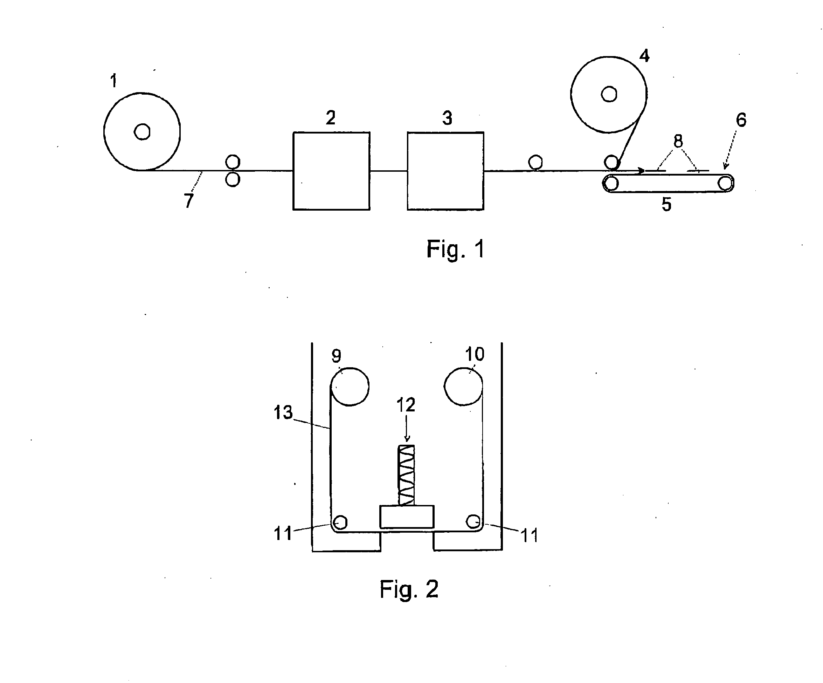

In den Fig. 1 und 2 sind erfindungsgemäße Verfahren zur Einbringung des Etiketts in die Spritzgussform dargestellt.

Fig. 1 zeigt das Verfahren zur Aufbringung eines Etiketts durch einen Bestückungsautomaten bzw. durch manuelle Aufbringung. Darin bedeuten 1 die Abwickelvorrichtung 2 das Druckwerk, 3 die Stanzvorrichtung, 4 die Aufinrickelvorrichtung, 5 die Transportvorrichtung, 6 die Abnahmestelle (ggf. mechanisch oder manuell), 7 das Etikettengrundmaterial, 8 die Etiketten.

Fig. 2 zeigt das Verfahren zur Aufbringung eines Etiketts mittels eines werkzeugintegrierten Bestückungssystems.
Darin bedeuten 9 die Abwickelvorrichtung, 10 die Aufwickelvorrichtung, 11 Umlenkrollen, 12 die Aufbringvorrichtung, 13 das Etikettenmaterial (ggf. vorbedruckt).

## Patentansprüche

1. Verfahren zur eindeutigen Kennzeichnung von Spritzgussteilen mit Produkt-, herstellungsspezifisch und/oder verwendungsspezifischen Informationen oder Funktionen, **dadurch gekennzeichnet, dass** in die Spritzgussform ein Etikett oder Teile eines Etiketts, das mit den produkt-, herstellungsspezifischen und/oder verwendungsspezifischen Informationen oder Funktionen versehen ist, eingelegt wird, wobei das Etikett an der Form haftet, und anschließend der Spritzgießvorgang durchgeführt wird.

2. Verfahren nach Anspruch 1, **dadurch gekennzeichnet, dass** das Etikett manuell in die Spritzgussform eingelegt wird.

3. Verfahren nach Anspruch 1, **dadurch gekennzeichnet, dass** das Etikett durch einen Bestückungsautomaten in die Spritzgussform eingelegt wird,
wobei die das ggf. vorbedruckte Etikettenbasismaterial tragende Bahn von einer Rolle abgewickelt, anschließend ggf. durch ein Druckwerk geführt, dort bedruckt, anschließend mit einer Stanzmaschine ausgestanzt und auf die gewünschte Dimension formatiert wird und anschließend die ausgestanzten Etiketten auf einen Transportband abgelegt durch mittels eines Bestückungsautomaten abgenommen und in die Spritzgussform eingelegt werden wobei das verbleibende Trägermaterial gleichzeitig auf einer Aufwickelvorrichtung aufgewickelt wird.

4. Verfahren nach Anspruch 1, **dadurch gekennzeichnet, dass** das Etikett durch ein werkzeugintegriertes Bestückungssystem in die Spritzgussform eingelegt wird wobei die das Etikettenbasismaterial tragende Bahn von einer Abwickelvorrichtung abgewickelt, über eine Umlenkrolle zu einer Aufbringvorrichtung geführt, dort formatiert und anschließend in der Spritzgussform platziert wird und anschließend das Trägermaterial über eine Umlenkrolle zur Aufwickelvorrichtung geführt wird.

5. Verfahren nach Anspruch 4, **dadurch gekennzeichnet, dass** die das Etikettenmaterial tragende Bahn durch eine nach der Abwickelrolle situiertes Druckwerk geführt und individuell bedruckt wird.

6. Verfahren nach einem der Ansprüche 1 bis 5, **dadurch gekennzeichnet, dass** das Etikett produkt-, herstellungs- und/oder kundenspezifische Daten aufweist.

7. Verfahren nach einem der Ansprüche 1 bis 6, **dadurch gekennzeichnet, dass** das Etikett Sicherheitselemente -oder verarbeitungsrelevante Elemente wie Indikatoren, optische aktive Merkmale, elektrisch leitfähige Merkmale, magnetische Merkmale, thermochrome Merkmale, RFID-Transponder, oder Chips aufweist.

8. Verfahren nach einem der Ansprüche 1 bis 7, **dadurch gekennzeichnet, dass** das Etikett mit einer Selbstklebebeschichtung und/oder einer Schutzschicht versehen ist.

9. Verfahren nach einem der Ansprüche 1 bis 9, **dadurch gekennzeichnet, dass** das Etikett ein mehrschichtiges Etikett ist.

10. Verfahren nach einem der Ansprüche 1 bis 9, **dadurch gekennzeichnet, dass** das Etikett mit einer Beschichtung aus unstöchiometrischem Aluminiumoxid versehen ist und mit Hilfe eines Lasers beschriftet ist.
